# EUROPÄISCHE PATENTSCHRIFT

(11) **EP 1 058 576 B1**
(45) Veröffentlichungstag und Bekanntmachung des Hinweises auf die Patenterteilung: **08.05.2002**
(21) Anmeldenummer: 99910243.7
(22) Anmeldetag: 19.02.1999
(51) Int. Cl.: B01D 11/02, C08G 69/46

(54) **VERFAHREN ZUR EXTRAKTION VON POLYAMID-6-TEILCHEN**
METHOD FOR EXTRACTING POLYAMIDE-6 PARTICLES
PROCEDE D'EXTRACTION DE PARTICULES DE POLYAMIDE-6

(30) Priorität: 27.02.1998 DE 19808442
(43) Veröffentlichungstag der Anmeldung: 13.12.2000
(73) Patentinhaber: BASF AKTIENGESELLSCHAFT, 67056 Ludwigshafen (DE)
(72) Erfinder: MOHRSCHLADT, Ralf, D-68723 Schwetzingen (DE); HILDEBRANDT, Volker, D-68169 Mannheim (DE); WARZELHAN, Volker, D-67273 Weisenheim (DE)
(74) Vertreter: Isenbruck, Günter, Dr.
(86) Internationale Anmeldenummer: EP9901089
(87) Internationale Veröffentlichungsnummer: WO9943407

(56) Entgegenhaltungen:
- EP-A- 0 308 774
- DD-A- 289 471
- DE-A- 3 534 817
- DE-A- 4 324 616
- DE-A- 19 505 150
- DATABASE WPI Section Ch, Week 9511 Derwent Publications Ltd., London, GB; Class A23, AN 95-078098 XP002106473 & JP 07 003015 A (TOYOBO), 6. Januar 1995

## Beschreibung

Die Erfindung betrifft ein Verfahren zur Extraktion von Polyamid-6-Teilchen oder Polyamid-6 enthaltenden Polymerteilchen mit wäßrigen Extraktionsmitteln.

Polyamide und insbesondere Polyamid 6 enthalten nach der Polymerisation aufgrund der Ausbildung der chemischen Gleichgewichte in der Polymerschmelze niedermolekulare, extrahierbare Bestandteile aus Monomeren und Oligomeren, deren Trockenmasse als "Extrakt" bezeichnet wird. Um eine Beeinträchtigung der Produktqualität und der Verarbeitungseigenschaften, zum Beispiel während des Spritzguß- oder des Extrusionsverfahrens oder während des Verspinnens, auszuschließen, ist eine Abreicherung des Extraktgehaltes notwendig. Üblicherweise erfolgt die hierzu erforderliche sogenannte "Extraktion" mit Hilfe von Wasser bei erhöhten Temperaturen, wie zum Beispiel in DE-A 2 501 348 beschrieben. Der wäßrige Extrakt wird aufkonzentriert und in die Polymerisation zurückgeführt.

Um eine ausreichende Extraktionsgüte des Polyamids und insbesondere eine Abreicherung kritischer Oligomere und insbesondere Dimere sicherzustellen, sind oft lange Verweilzeiten in der Extraktionsstufe und somit große Extraktionskolonnen erforderlich, was sowohl die nötigen Investitionen erheblich erhöht als auch die Flexibilität des Verfahrens nachteilig beeinflußt.

Eine Extraktion von Polyamidgranulaten mit Hilfe von Caprolactam, wie sie beispielsweise in JP-A-72 26 438 beschrieben wird, ist nachteilig, da Caprolactam ein vergleichsweise teurer Hilfsstoff ist und nicht zwangsläufig als Einsatzstoff zur Verfügung steht.

Aufgabe der Erfindung war es daher, ein Verfahren zur Extraktion bereitzustellen, das zum einen die Extraktionszeit im Vergleich zur Extraktion mit reinem Wasser verkürzt und die Effizienz der Extraktion verbessert und zum anderen möglichst auf Caprolactam als Extraktionshilfsmittel verzichtet.

Die Aufgabe wird erfindungsgemäß gelöst durch ein Verfahren zur Extraktion von Polyamid-6-Teilchen oder Polyamid-6 enthaltenden Polymerteilchen mit wäßrigen Extraktionsmitteln, wobei als wäßrige Extraktionsmittel wäßrige Lösungen von Aminonitrilen eingesetzt werden.

Die Aufgabe wird außerdem gelöst durch ein Verfahren zur Herstellung von extrahierten Polyamidteilchen oder Polyamide enthaltenden Polymerteilchen durch Polymerisation von Aminonitrilen und Extraktion der so erhaltenen Polyamidteilchen oder Polyamide enthaltenden Polymerteilchen mit wässrigen Lösungen von Aminonitrilen.

Die Extraktion wird durchgeführt, indem die Polyamidteilchen oder Polyamide enthaltenden Polymerteilchen, insbesondere das Polymergranulat oder ähnliche Formkörper zunächst mit dem Extraktionsmittel in Kontakt gebracht werden, um damit die unerwünschten niedrigmolekularen Bestandteile aus dem Granulat zu extrahieren. In einem weiteren Schritt wird das Granulat aus dem Extraktionsmittel entfernt und von Resten des Extraktionsmittels beispielsweise durch Spülen mit Wasser befreit. Gewünschtenfalls kann eine weitere Extraktion des Granulats mit oder ohne den Zusatz von Aminonitril erfolgen. Je nach gewünschter Spezifikation des Produktes kann durch die Kombination der genannten Schritte in Abhängigkeit von den apparativen Voraussetzungen und den gewählten Parametern wie Extraktionsmittelkonzentration, Granulat/Extraktionsmittelverhältnis, Temperaturen und Verweilzeiten die Extraktionsgüte in weiten Grenzen eingestellt werden.

Die erfindungsgemäße Extraktion kann je nach apparativen Gegebenheiten einstufig oder auch mehrstufig durchgeführt werden. Die oben genannten Stufen und deren Abfolge können entweder diskontinuierlich, d.h. in einem Reaktor zeitlich nacheinander, oder kontinuierlich, d.h. in aufeinanderfolgenden Reaktoren zur gleichen Zeit, durchgeführt werden. Selbstverständlich ist es auch möglich, einen Teil der Stufen kontinuierlich und die restliche(n) Stufe(n) diskontinuierlich auszuführen.

Bei kontinuierlicher Durchführung der Extraktion kann das Extraktionsmittel das Polymer sowohl im Gleich- als auch im Gegenstrom passieren. Bevorzugt wird die Extraktion im Gegenstrom betrieben, d.h. die Polymerteilchen oder Polyamide enthaltenden Polymerteilchen und das wäßrige Extraktionsmittel werden im Gegenstrom gefahren.

In einer bevorzugten Ausführungsform wird die Extraktion in mehreren Stufen durchgeführt, wobei die eingesetzten Extraktionsmittel in den unterschiedlichen Stufen unterschiedliche Zusammensetzungen aufweisen. Möglich ist beispielsweise eine Vorextraktion mit einem Extraktionsmittel, das Aminonitril und Wasser enthält, gefolgt von einer Extraktionsstufe, die frei von Aminonitril ist. Vorteilhaft an dieser Ausführungsform ist die Verringerung des Einflusses von Verunreinigungen beziehungsweise die Vermeidung von Granulatoberflächenverunreinigungen durch das Extraktionsmittel. Diese zweistufige Ausführungsform kann vorzugsweise in nur einem Apparat durchgeführt werden.

Dabei wird Polyamidgranulat nach der Polymerisations- und anschließenden Granulierstufe über einen Transportwasserkreislauf einer kontinuierlichen Extraktionssäule zugeführt. Das Granulat wird über eine Abscheidevorrichtung (Sieb) vom Transportwasser getrennt und fällt in den Extraktorkopf. Es durchströmt den Extraktionsturm aufgrund der Schwerkraft von oben nach unten und wird auf diesem Weg von niedermolekularen Bestandteilen durch Extraktion befreit. Am Fuß der Extraktionssäule wird kontinuierlich Extraktionslösung oder Wasser zugesetzt, welches die Extraktionssäule im Gegenstrom von unten nach oben durchläuft und sich dabei mit Monomeren und Oligomeren belädt. Die beladene Extraktionslösung wird am Kopf der Säule entnommen und als Extraktwasserablauf abgeführt. Gewünschtenfalls schließt sich eine Extraktwasseraufarbeitung oder eine Rückführung in den Eduktstrom an.

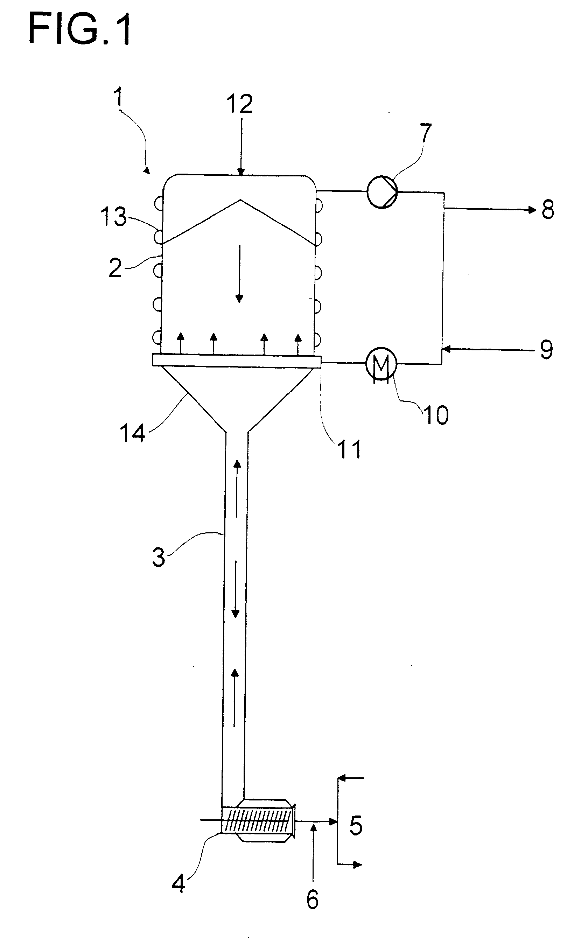

Als Extraktionsmittel wird eine wäßrige Lösung von Aminonitrilen eingesetzt. Der Gehalt an Aminonitrilen ist hierbei so gewählt, daß vollständige Mischbarkeit des eingesetzten Extraktionsmittels vorliegt, d.h. im Extraktionsmittel tritt keine Entmischung auf. Geeignet ist ein Gehalt an Aminonitrilen von insgesamt 5 bis 95 Gew.-%, bezogen auf das Gesamtgewicht der wäßrigen Lösung. 2 mögliche Extraktionskolonnen sind in der Zeichnung in Fig. 1/2 bzw. Fig. 3 dargestellt. Die Kolonne kann auch eine Kombination beider Varianten darstellen.

### Kurzbeschreibung der Zeichnung:

- Fig. 1: zeigt eine schematische Darstellung einer ersten Ausführungsform einer Extraktionskolonne für das erfindungsgemäße Verfahren;
- Fig.2 und 3: zeigen schematische Darstellungen weiterer Ausführungsformen einer Extraktionskolonne für das erfindungsgemäße Verfahren.

In der Figur 1 ist beispielhaft eine Extraktionskolonne für das erfindungsgemäße Verfahren schematisch dargestellt. Die Extraktionskolonne 1 umfaßt eine erste (obere) rohrförmige Zone 2 und eine zweite (untere) rohrformige Zone 3, die durch einen trichterförmigen Abschnitt 14 miteinander verbunden sind. Das Verhältnis der Länge der ersten Zone 2 zu derjenigen der zweiten Zone 3 liegt im allgemeinen im Bereich von 1:5 bis 5:1, vorzugsweise 1:2 bis 2:1. Das Verhältnis des Rohrdurchmessers der ersten Zone 2 zu demjenigen der zweiten Zone 3 liegt im allgemeinen im Bereich von 8:1 bis 2:1, vorzugsweise 6:1 bis 3:1.

Das Polyamidgranulat 12 wird von oben in die erste Zone 2 eingetragen, durchläuft diese von oben nach unten und anschließend die rohrförmige zweite Zone 3 und wird dann über die Austragsschnecke 4 in den Transportwasserkreislauf 5 ausgetragen. Frischwasser 6 wird nach Bedarf durch die Austragsschnecke 4 der Extraktionskolonne 1 zugeführt. Beim Durchlaufen der Extraktionskolonne 1 nimmt das Wasser in der zweiten Zone 3 zunächst Monomer auf und vermischt sich dann im unteren Teil der ersten Zone 2 mit dem dort im Kreislauf geführten Extraktionsmittel. Dieses wird im oberen Teil der ersten Zone 2 durch eine Pumpe 7 entnommen, über einen Wärmetauscher 10, durch den die Temperatur im gewünschten Bereich gehalten wird, geführt und über eine Lochplatte 11 im unteren Bereich der ersten Zone 2 wieder zugeführt. Ein Teil des Extraktionsmittels wird an 8 ausgekreist und über 9 wird soviel Aminonitril und über 6 soviel Wasser zugeführt, daß die Aminonitrilkonzentration im Extraktionsmittel im gewünschten Bereich gehalten wird. Die obere Zone 2 kann gegebenenfalls zusätzlich durch Mantelrohre 13 beheizt werden, während die zweite Zone 3 nicht extern erwärmt, aber gegebenenfalls gekühlt werden kann.

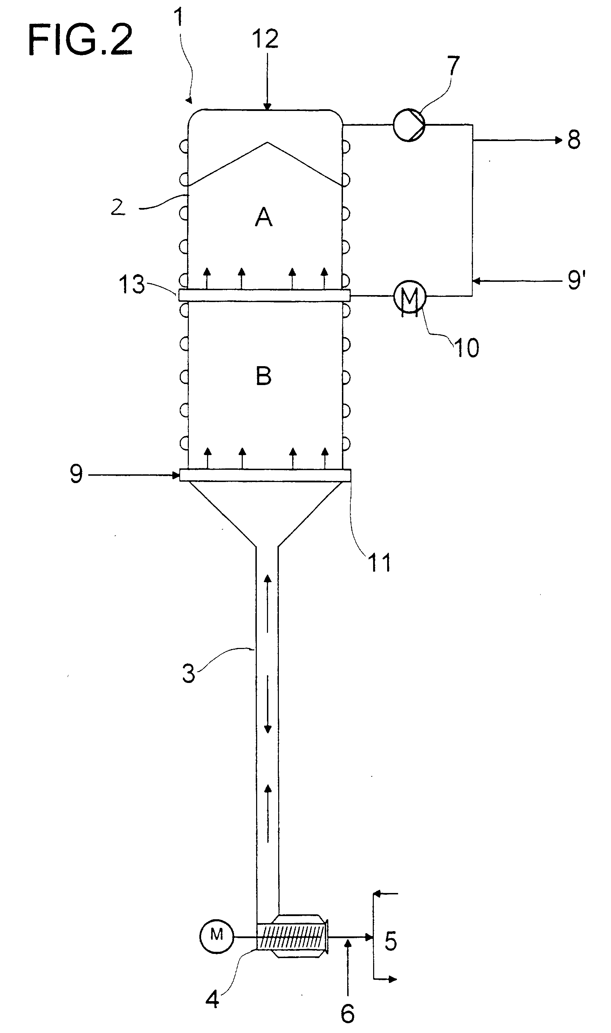

Eine weitere Ausführungsform einer für das erfindungsgemäße Verfahren brauchbaren Extraktionskolonne ist in Fig. 2 gezeigt. Die Extraktionskolonne 1 umfaßt eine erste (obere) Zone 2 und eine zweite (untere) Zone 3. Das Verhältnis der Länge der ersten Zone 2 zu derjenigen der zweiten Zone 3 liegt dabei im allgemeinen im Bereich von 1:5 bis 5:1, vorzugsweise 1:2 bis 2:1. Das Verhältnis der Rohrdurchmesser ist wie bei Fig. 1 angegeben. Die Bereiche A und B erstrecken sich über etwa die gleiche Länge.

Die Extraktion verläuft im Prinzip wie bei Fig. 1 beschrieben. Im Unterschied dazu umfaßt der Extraktionsmittelkreislauf nur den oberen Teil A der ersten Zone 2, d.h. das Extraktionsmittel wird im oberen Bereich der ersten Zone 2 abgezogen und in deren mittleren Bereich über eine zweite Ringdüse 13 wieder zugeführt. Frisches Aminonitril wird bei 9 über eine erste Ringdüse 11, die sich im unteren Bereich der ersten Zone 2 befindet, zugegeben. Ein Teil des Aminonitrils kann auch bei 9 direkt in den Kopfkreislauf geführt werden. Auf diese Weise kann im Extraktor der Aminonitrilgradient gezielt beeinflußt werden. Das Polyamidgranulat 12 wird also zunächst im oberen Bereich A im Kreislauf mit dem Extraktionsmittel und dann im unteren Bereich B mit Aminonitril im Gegenstrom behandelt Man erhält auf diese Weise ein Polyamid mit besonders geringem Dimergehalt (< 0,05 %).

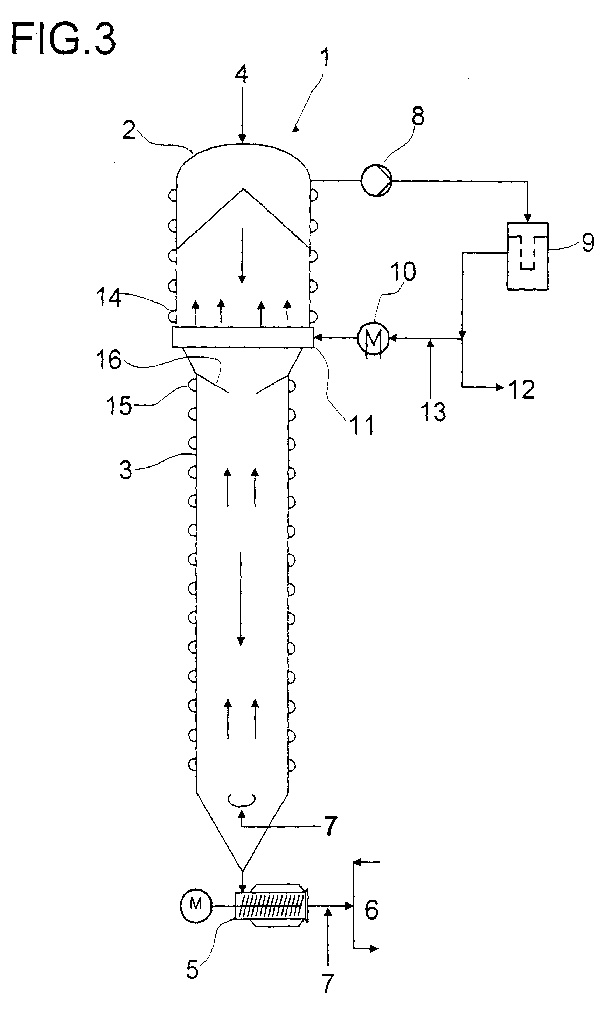

In der Figur 3 ist beispielhaft eine Extraktionskolonne für das erfindungsgemäße Verfahren schematisch dargestellt. Die Extraktionskolonne 1 umfaßt eine erste (obere) Zone 2 und eine zweite (untere) rohrförmige Zone 3. Das Verhältnis der Lange der ersten Zone 2 zu derjenigen der zweiten Zone 3 liegt im allgemeinen im Bereich von 0,05:1 bis 1:1, vorzugsweise von 0,1:1 bis 0,3:1. Das Polyamidgranulat 4 wird von oben in die erste Zone 2 eingetragen, durchläuft diese von oben nach unten und anschließend die rohrförmige zweite Zone 3 und wird dann über die Austragsschnecke 5 in den Transportwasserkreislauf 6 ausgetragen. Wasser 7 wird durch die Austragsschnecke 5 und über eine Ringdüse im Fuß des Extraktors von unten der Extraktionskolonne 1 zugeführt. Beim Durchlaufen der Extraktionskolonne 1 nimmt es in der zweiten Zone 3 zunächst Aminonitril auf und vermischt sich dann im unteren Teil der ersten Zone 2 mit dem dort im Kreislauf geführten Extraktionsmittel. Dieses wird im oberen Teil der ersten Zone 2 durch eine Pumpe 8 entnommen, in dem Filter 9 filtriert, über einen Wärmetauscher 10, durch den die Temperatur im gewünschten Bereich gehalten wird, geführt und über eine Ringdüse oder Lochplatte 11 im unteren Bereich der ersten Zone 2 wieder zugefuhrt. Ein Teil des Extraktionsmittels wird an 12 ausgekreist und über 13 wird soviel frisches Aminonitril zugesetzt, daß die Aminonitrilkonzentration im Extraktionsmittel im gewünschten Bereich gehalten wird Die erste und die zweite Zone werden uber die Mantelheizrohre 14 bzw. 15 beheizt. Zwischen der ersten und der zweiten Zone befindet sich eine Verengung des Strömungsquerschnitts 16, die zusammen mit der im Vergleich zur zweiten Zone 3 höheren Temperatur in der ersten Zone 2 ein Absinken der spezifisch schwereren aminonitril-haltigen Lösung verhindert.

### Variante 1:

Im oberen Teil der Extraktionssäule wird das Extraktionsmittel im Kreis geführt. Dieser obere Teil der Extraktionszone beträgt 5 bis 90 %, bevorzugt 10 - 50 % und besonders bevorzugt 20 - 40 % des Gesamtvolumens des Extraktors. Das die niedermolekularen Anteile enthaltende Extraktionsmittel wird am Kopf der Säule abgezogen und in einem bestimmten Teil unterhalb des Kopfes über eine Verteilungseinrichtung gleichmäßig über den Querschnitt in die Säule zurückgeführt. Die im Kopf umgewälzte Extraktionsmittelmenge wird dabei so gewählt, daß einerseits ein Temperatur- und Konzentrationsausgleich im Kopf sichergestellt wird und ein intensiver Stoffaustausch an der Phasengrenzfläche der Granulatkömer stattfindet. Es sollte darauf geachtet werden, daß die Strömungsgeschwindigkeit der wäßrigen Lösung den Wirbelpunkt des Granulats nicht überschreitet. Es wird bevorzugt eine Geschwindigkeit von 2 bis 20 m/h, vorzugsweise 3 - 15 m/h eingestellt. Um dem Aufwirbeln des Granulats entgegenzuwirken, besitzt der Extraktorkopf einen größeren Durchmesser als der untere Rohrteil Durch einen außerhalb des Extraktionsturmes im Kopfkreislauf befindlichen Wärmetauscher wird die Extraktionstemperatur im Kopf eingestellt und das eintretende Polyamidgranulat auf die gewünschte Temperatur aufgeheizt. Die Temperatur im Extraktorkopf beträgt vorzugsweise 80 bis 140°C, bevorzugt 100 - 130°C. Die Temperatur sollte vorzugsweise so gewählt werden, daß sich das Polymergranulat nicht im Extraktionsmittel löst und der Siedepunkt des Extraktionsmittels nicht überschritten wird.

Durch Zugabe von flüssigem Aminonitril und gegebenenfalls polyamidbildenden Monomeren und/oder Oligomeren mit einer Temperatur von 80 bis 100°C in den Kopfkreislauf kann im oberen Teil der Extraktionszone ein Gehalt an Aminonitril und polyamidbildenden Monomeren bzw. Oligomeren von 5 bis 95 Gew.-%, bevorzugt 10 bis 80 Gew-% und besonders bevorzugt 15 bis 70 Gew.-% eingestellt werden. Diese Zusammensetzung des Extraktionsmittels ist hier als Mittelwert der Konzentrationen im Kopfteil des Extraktors anzusehen. Es wird dadurch die Abreicherung der niedermolekularen Bestandteile, insbesondere von Monomeren und Oligomeren, aus dem Granulat beschleunigt und gleichzeitig ein niedrigerer Restextraktgehalt im Granulat erzielt.

Bei der Polyamid-6-Extraktion und der Extraktion von Polyamid-6 enthaltenden Polymermischungen wird beispielsweise die Abreicherung von Caprolactam und dessen Oligomeren beschleunigt. Wurde das Polyamid aus Aminomtrilen erhalten, so können diese und deren Oligomere abgereichert werden.

Im Vergleich zu bekannten Verfahren werden nicht Caprolactam oder reines Wasser, sondern eine wäßrige Lösung aus Aminonitrilen eingesetzt. Es resultieren daraus Produkte mit geringem Restgehalt an niedermolekularen Bestandteilen, insbesondere an Caprolactam-Dimer.

### Variante 2:

In einer besonders bevorzugten Ausführungsform befindet sich unterhalb des Kopfkreislaufs eine Strömungssperre, die durch eine gezielte Verengung des Strömungsquerschnitts in Abhängigkeit vom Extraktionsmittel/Granulat-Verhältnis zu einer Erhöhung der Leerrohr-Strömungsgeschwindigkeit der aufsteigenden Flüssigphase führt. Diese Verengung wird durch eine wabenförmige Einschnürung realisiert. Dadurch wird zum einen ein Absinken der spezifisch schwereren wäßrigen Lösung aus dem Kopfteil des Extraktors in den darunterliegenden Rohrteil verhindert. Zum anderen wird durch die Verengung des Strömungsquerschnitts der Kopfteil des Extraktors, in dem aufgrund der Umwälzung eine sehr große Rückvermischung herrscht, wirkungsvoll vom Rohrteil getrennt, in dem aufgrund des Gegenstrom-Konzentrationsprofils eine möglichst niedrige Rückvermischung angestrebt wird.

Dem Absinken der spezifisch schwereren Extraktionslösung aus dem Kopfteil wird zudem dadurch entgegengewirkt, daß die Zone am Kopf des Extraktionsturmes auf einer um 5 bis 40°C, bevorzugt 10 bis 20°C, höheren Temperatur gehalten wird als die Zone am Boden des Extraktors.

Weiterhin wird vorzugsweise die Strömungsgeschwindigkeit des Extraktionsmittels hoch gehalten, indem der Rohrteil möglichst schlank gestaltet wird. Die Leerrohr-Strömungsgeschwindigkeit sollte vorzugsweise 0,2 bis 6 m/h, bevorzugt 1 bis 3 m/h, betragen. Aufgrund der vergleichsweise kurzen Verweilzeit und des somit geringen Extraktvolumens kann der Rohrquerschnitt klein gehalten werden, ohne die Bauhöhe des Extraktionsturmes zu aufwendig und kostspielig werden zu lassen.

Es wurde gefunden, daß bei der erfindungsgemäßen Extraktion ein kleineres Wasser/-Granulat-Verhältnis als bei der Extraktion mit Wasser benötigt wird. Dadurch kann sich gewünschtenfalls die zu verdampfende Wassermenge in der Extraktwasseraufarbeitung verringern, was hinsichtlich der Wirtschaftlichkeit des Gesamtverfahrens vorteilhaft sein kann.

Der Granulataustrag aus dem Extraktor kann beispielsweise über Förderschnecken oder Ventile erfolgen. Bevorzugt sind tiefgezogene Einwellenschnecken, die das Granulat kontinuierlich in den Transportwasserkreislauf dosieren. Über die Drehzahl der Schneke wird die Granulatmenge und dadurch der Granulatstand im Extraktionsturm geregelt. Durch Zugabe geringer Wassermengen in den Transportwasserkreislauf, welche durch die Schnecke hindurch in den Extraktor eintreten, wird in der Schnecke eine Flüssigkeitsströmung entgegen dem austretenden Granulat erzeugt und gleichzeitig auch im Fuß des Extraktors eine Aufwärtsströmung der Flüssigphase zur Vermeidung von Rückvermischung sichergestellt.

### Extraktionsmittel

Als Aminonitril können prinzipiell alle Aminonitrile, d.h. Verbindungen, die sowohl mindestens eine Amino- als auch mindestens eine Nitrilgruppe aurweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe einen Alkyl-Spacer mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man bevorzugt lineare ω-Aminoalkylhitrile ein, wobei der Alkylenrest (-CH₂-) vorzugsweise 4 bis 12 C-Atome, besonders bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril. 6-Aminocapronitril erhält man üblicherweise durch Hydrierung von Adipodinitril nach bekannten Verfahren, beispielsweise beschrieben in DE-A 836,938, DE-A 848,654 oder US 5,151,543.

Selbstverständlich können auch Gemische mehrerer Aminonitrile eingesetzt werden.

Die Extraktion von Polyamidgranulaten mit Hilfe von Caprolactam, wie beispielsweise in JP-A-72 26438 beschrieben, ist z.B. bei der Herstellung von Polyamid 6 aus Aminocapronitril nicht sinnvoll, da Caprolactam in diesem Fall kein Einsatzstoff ist und folglich nicht zwangsläufig zur Verfügung steht. Für derartig hergestellte Polyamide ist die erfindungsgemäße Extraktion mit Aminocapronitril bevorzugt. Das erhaltene Extraktwasser kann direkt oder nach nur geringfügiger Aufkonzentrierung in den Eduktstrom zurückgeführt werden.

Wird Polycaprolactam extrahiert, so besitzt das die Extraktionsstufe verlassende Granulat einen Restgehalt an niedermolekularen Bestandteilen von weniger als 1,5 %, bevorzugt weniger als 1,0 %, und besonders bevorzugt weniger als 0,4 %.

Zusätzlich wurde gefunden, daß die erfindungsgemäße Extraktion durch Zugabe von Aminocapronitril zu einer hohen Raum/Zeit-Ausbeute und damit gewünschtenfalls zu einer Verkürzung der Extraktionszeit führen kann.

Der bei Spinnanwendungen unerwünschte Gehalt an Caprolactam-Dimeren kann durch die Extraktion signifikant abgesenkt werden.

Es ist möglich, die erfindungsgemäße Extraktion mit nachfolgender Wäsche des Granulates in nur einem Apparat durchzuführen. Dazu ist eine geeignete Reaktorgeometrie (Kopf-, Rohrteil) mit zusätzlicher Strömungssperre und optimale Strömungsgeschwindigkeit mit Temperaturprofil entlang der Extraktionskolonne vorteilhaft.

Das beschriebene Verfahren kann zu einem günstigeren Wasser/Granulat-Verhältnis (≤0,8) als bei der Extraktion mit Wasser führen und dadurch eine Kostenersparnis bewirken.

Die Erfindung wird nachstehend anhand von Beispielen näher erläutert.

### Beispiele

### Beispiel 1:

Das für die Versuche eingesetzte unextrahierte Polyamid 6-Granulat besitzt eine zylindrische Form mit den Abmessungen von Durchmesser ca. 3 mm und Höhe ca. 2 mm. Der Caprolactamgehalt beträgt 7,8 %, der Dimergehalt 1,1 %, wobei der Restextraktgehalt insgesamt 11,2 %, bezogen auf das Granulat, beträgt.

### Versuchsdurchführung:

100 g Granulat werden mit 1000 ml 20%iger Aminocapronitrillösung bei 95°C gerührt. Über einen Zeitraum von 4 Stunden werden Proben aus dem Kolben entnommen. Das Granulat wird über eine Glasfritte abfiltriert und das Extraktionsmittel zurück in den Kolben gegeben. Anschließend wird das Granulat zweifach mit je 20 ml Wasser gewaschen und bei 60°C im Vakuum 16 Stunden getrocknet.
Das so erhaltene Granulat wird einer Restextraktbestimmung unterzogen. Die ermittelten Werte sind in der folgenden Tabelle 1 zusammengefaßt.

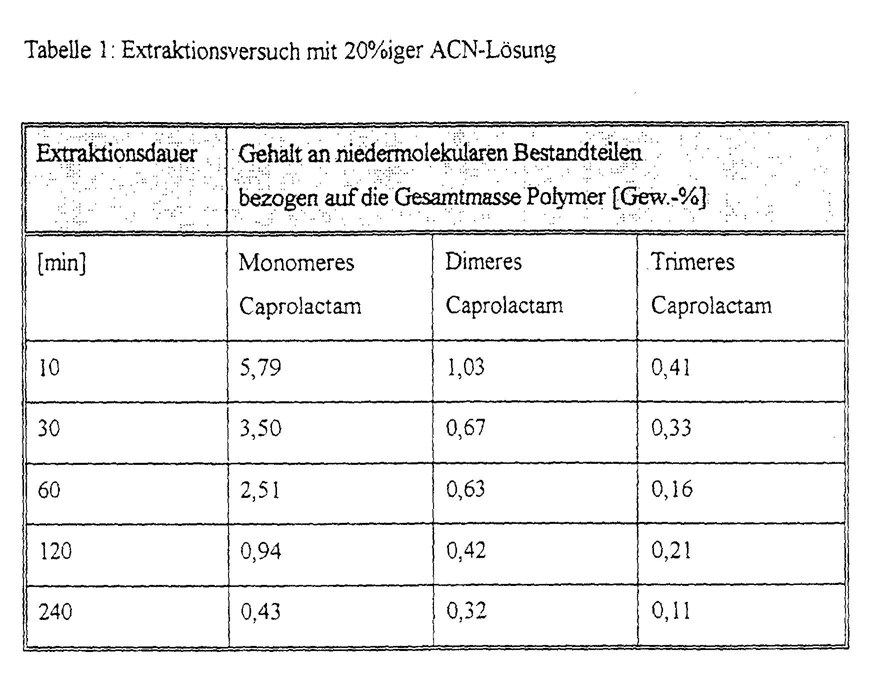

### Vergleichsbeispiel V:

100 g Granulat werden mit 1000 ml Wasser bei 95°C gerührt. Über einen Zeitraum von 4 Stunden werden Proben aus dem Kolben entnommen. Das Granulat wird über eine Glasfritte abfiltriert und das Extraktionsmittel in den Kolben zurückgegeben. Anschließend wird das Granulat zweifach mit je 20 ml Wasser gewaschen und bei 60°C im Vakuum 16 Stunden getrocknet.
Das so erhaltene Granulat wird einer Restextraktbestimmung unterzogen. Die ermittelten Werte sind in der nachfolgenden Tabelle 2 zusammengefaßt.

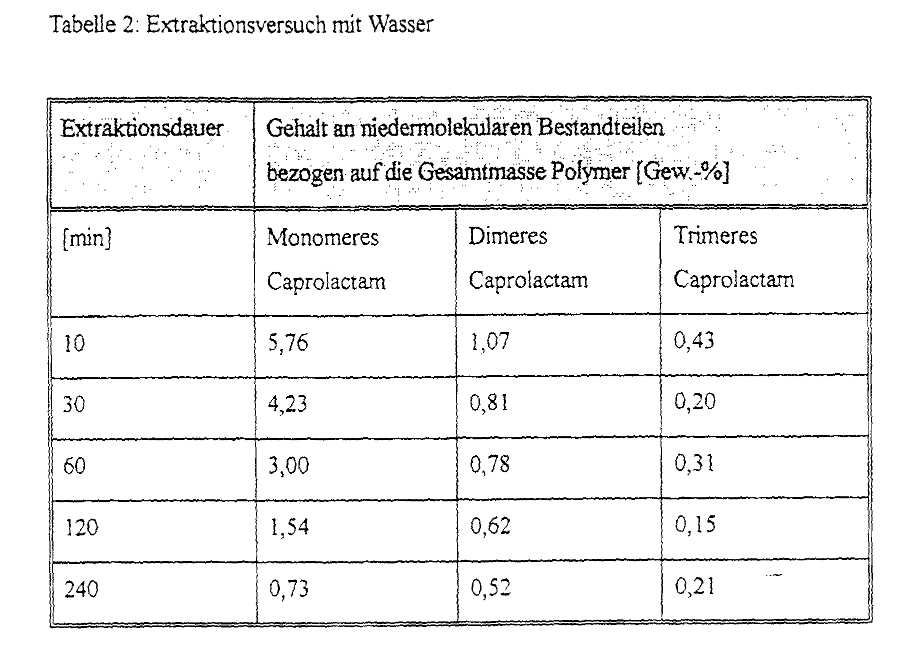

## Patentansprüche

1. Verfahren zur Extraktion von Polyamid-6-Teilchen oder Polyamid-6 enthaltenden Polymerteilchen mit wäßrigen Extraktionsmitteln, **dadurch gekennzeichnet, daß** als wäßrige Extraktionsmittel wäßrige Lösungen von Aminonitrilen eingesetzt werden.

2. Verfahren zur Herstellung von extrahierten Polyamidteilchen oder Polyamide enthaltenden Polymerteilchen durch Polymerisation von Aminonitrilen und Extraktion der so erhaltenen Polyamidteilchen oder Polyamide enthaltenden Polymerteilchen mit wäßrigen Lösungen von Aminonitrilen.

3. Verfahren nach einem der Ansprüche 1 oder 2, **dadurch gekennzeichnet, daß** als Aminonitrile ω-Aminonitrile eingesetzt werden.

4. Verfahren nach Anspruch 3, **dadurch gekennzeichnet, daß** als ω-Aminonitrile ω-Aminoalkylnitrile eingesetzt werden.

5. Verfahren nach einem der Ansprüche 1 bis 4, **dadurch gekennzeichnet, daß** die Extraktion kontinuierlich durchgeführt wird und die Polyamidteilchen oder Polyamide enthaltenden Polymerteilchen und das wäßrige Extraktionsmittel im Gegenstrom gefahren werden.

6. Verfahren nach Anspruch 5, **dadurch gekennzeichnet, daß** die Extraktion in einer in zwei Zonen unterteilte Extraktionskolonne durchgeführt wird, wobei in der ersten Zone eine Extraktion mit dem wäßrigen Extraktionsmittel im Kreislauf und danach in der zweiten Zone eine Extraktion mit Wasser im Gegenstrom durchgeführt wird.

## Claims

1. A process for extracting nylon-6 particles, or polymer particles comprising nylon-6, with aqueous extractants, which comprises using aqueous solutions of aminonitriles as aqueous extractants.

2. The process for preparing extracted polyamide particles, or polymer particles comprising polyamides, by polymerization of aminonitriles and extraction of the thus obtained polyamide particles, or polymer particles comprising polyamides, using aqueous solutions of aminonitriles.

3. A process as claimed in either of claims 1 and 2, wherein the aminonitriles used are ω-aminonitriles.

4. A process as claimed in claim 3, wherein the ω-aminonitriles used are ω-aminoalkyl nitriles.

5. A process as claimed in any of claims 1 to 4, wherein the extraction is carried out continuously and the polyamide particles, or polymer particles comprising polyamides, and the aqueous extractant are passed countercurrently.

6. A process as claimed in claim 5, wherein the extraction is carried out in an extraction column divided into two zones, the extraction in the first zone being carried out using the aqueous extractant in recirculation and the extraction in the second zone being carried out thereafter using water in countercurrent.

## Revendications

1. Procédé d'extraction de particules de polyamide-6 ou de particules de polymère contenant du polyamide-6 par des agents d'extraction aqueux, **caractérisé en ce qu'**on met en oeuvre, comme agents d'extraction aqueux, des solutions aqueuses d'aminonitriles.

2. Procédé de préparation de particules extraites de polyamide ou de polymère contenant des polyamides par polymérisation d'aminonitriles et extraction des particules de polyamide ou particules de polymère contenant des polyamides ainsi obtenues par des solutions aqueuses d'aminonitriles.

3. Procédé suivant l'une des revendications 1 et 2, **caractérisé en ce que**, comme aminonitriles, on met en oeuvre des ω-aminonitriles.

4. Procédé suivant la revendication 3, **caractérisé en ce que**, comme ω-aminonitriles, on met en oeuvre des ω-aminoalkylnitriles.

5. Procédé suivant l'une des revendications 1 à 4, **caractérisé en ce que** l'extraction est effectuée en continu et **en ce que** les particules de polyamide ou particules de polymère contenant des polyamides et l'agent d'extraction aqueux sont guidés en contre-courant.

6. Procédé suivant la revendication 5, **caractérisé en ce que** l'extraction est effectuée dans une colonne d'extraction subdivisée en deux zones, une extraction étant effectuée dans la première zone en circuit avec l'agent d'extraction aqueux et ensuite une extraction étant effectuée dans la deuxième zone avec de l'eau en contre-courant.
